# EUROPEAN PATENT SPECIFICATION

(11) **EP 1 265 487 B1**
(45) Date of publication and mention of the grant of the patent: **24.01.2007**
(21) Application number: 01914021.9
(22) Date of filing: 22.03.2001
(51) Int. Cl.: A21D 10/00, A21D 8/04, A21D 2/16, A21D 2/02, A21D 2/18, A21D 2/22

(54) **LIQUID BREAD IMPROVER COMPOSITION**
FLÜSSIGES BROTVERBESSERUNGSMITTEL
COMPOSITION LIQUIDE AMELIORANT LA QUALITE DE PAIN

(30) Priority: 22.03.2000 GB 0006881
(43) Date of publication of application: 18.12.2002
(73) Proprietor: Cereform Limited, London SW1X 7LR (GB)
(72) Inventor: WHITEHURST, Robert John, Northampton NN7 2BL (GB)
(74) Representative: Turner, Craig Robert
(86) International application number: PCT/GB2001/001259
(87) International publication number: WO 2001/070036

(56) References cited:
- EP-A- 0 421 510
- EP-A- 0 518 507
- WO-A-94/01005
- US-A- 3 669 681
- US-A- 3 821 443
- US-A- 4 255 456
- US-A- 4 425 164
- US-A- 5 225 226
- US-A- 5 362 512

## Description

This invention relates to liquid compositions, and in particular to liquid compositions containing bread improver agents, and methods for their preparations.

### Background of the Invention

Bread improvers, more correctly known as dough conditioners, are now widely used in the baking industry. Bread improvers are typically added to improve one or more characteristics of a baked bread product, for example the crumb structure or degree of aeration of the bread. The precise manner in which bread improvers exert their effect is not well understood, but it is known that bread improvers can act by means of a variety of different chemical mechanisms. Thus, bread improvers can be categorized according to their mode of action, and examples of categories of bread improvers include oxidants, reducing agents, and enzymic agents.

Examples of commonly used oxidizing agents include ascorbic acid, and alkaline metal bromates and iodates such as potassium bromate and potassium iodate. Although the use of bromates and iodates is no longer allowed in the UK, these substances are still used in many other countries. In the UK, at least, ascorbic acid has become the bread improver of choice.

Oxidizing bread improving agents are believed to act by bringing about cross-linking between protein chains thereby assisting the building of a three-dimensional protein network within the dough. The three-dimensional protein network provides a structure to the dough thereby enabling the maintenance of an aerated structure typical of many modem breads. The cross-linking effect is believed to arise by virtue of the oxidation and linking of cystine thiol groups to form cysteine containing disulphide bridges between adjacent chains.

Examples of other bread improving agents include L-cysteine and inorganic reducing agents such as alkaline metal metabisulphites, for example sodium and potassium metabisulphites.

A wide variety of enzymes can be incorporated into bread improver compositions and these include amylases such a-amylase, hemicellulase, lipases, lipoxygenases, peroxidases, glucose oxidases, transglutaminases, by way of example.

Hitherto, bread improver compositions have generally been provided in the form of solid, e.g. powdered, compositions. However, the use of high speed bread baking and processing machinery, and the high through-put production lines now in use require accurate and rapid measurement and dispensing of improving agents into the dough mix. The provision of liquid compositions would enable the measurement and dispensing of required amounts of bread improver to be carried out more efficiently and quickly. However, a potential major problem associated with liquid compositions concerns their stability, and in particular the stability of liquid suspensions and their resistance to sedimentation. It will be appreciated that if settling of the suspension occurs, the accuracy with which individual portions of the improving agent can be dispensed will be dramatically reduced.

US 4,425,164 is concerned with an aerosol cookware lubricant composition. The patent discloses a composition comprising a vegetable oil solution of an emulsifier, such as lecithin, in admixture with a hydrocarbon propellant. The composition further comprises particles of white flour or white starch and fumed silica as well as optional antioxidants.

US 4,255,456 relates to a flavoured coating to be applied to the outer surface of untoasted baked goods in order to simulate toasting. The composition comprises roasted ground wheat in a carrier of high melting point hydrogenated vegetable oil. The patent discloses examples of such compositions further comprising sugar, lecithin, silicon dioxide flour, and flavouring agents.

US 3,669,681 describes a viscous shortening composition for use as a topping or filling for baked goods. The shortening composition comprises oil, colloidal silicon dioxide, a bridging compound such as polyhydrinc alcohol, and flavouring agents.

### Summary of the Invention

It is an object of the present invention to provide a stabilized bread improver composition in liquid form, and in particular a stabilizer liquid suspension containing a bread improver agent.

Accordingly, in a first aspect, the invention provides a liquid dough conditioner composition for adding to a dough mix, which composition comprises a suspension of an improving agent in an oily vehicle and a fumed silica stabilizing agent, the improving agent being selected from oxidizing agents, reducing agents and enzymes, characterised in that the components of the composition have been milled by means of a low shear, high impact milling method; wherein the particles forming the suspension have a mean particle size of less than 100 micrometres and a particle size distribution whereby the d[0.5] value is less than 100 micrometres and the d[0.9] value is less than 300 micrometres.

In one preferred embodiment of the invention, the improving agent comprises ascorbic acid, optionally in the presence of one or more enzymes such as amylase or cellulose.

The oily vehicle typically comprises one or more glycerides (e.g. fatty acid triglycerides, diglycerides or monoglycerides or mixtures thereof) or one or more plant oils, animal oils or fish oils and/or blends and derivatives thereof (such as hydrogenated or partially hydrogenated oils).

Examples of plant oils include palm oil, olive oil, corn oil, sesame seed oil, castor oil, canola oil, cottonseed oil, safflower oil, coconut oil, rapeseed oil, sunflower oil, soya bean oil, and other forms of vegetable oil.

Examples of fish oils include herring oil, menhaden oil, cod liver oil and sardine oil.

Examples of animal oils include lard, tallow, mutton fat, beef fat, turkey fat, chicken fat and pork fat.

Vegetable oils are preferred.

The oils can be naturally occurring oils, e.g. plant oils, fish oils or animal oils as described above, or they can be wholly or partially synthetic in nature. For example, the oils can be trans-esterification products of naturally occurring oils such as plant oils and other polyols such as propylene glycol and sorbitol.

The oils can have emulsifying properties, and examples of such emulsifying oils are oils containing mono-and/or di-glycerides, one particular example being diacetyl tartaric acid esters of monoglycerides.

Preferred oils are those in which the most prevalent fatty acid residues in the oil are derived from stearic acid, oleic acid or linoleic acid or hydrogenates or partial hydrogenates thereof.

The oils used in the suspensions can be liquid or semi-solid at room temperature, and it is generally preferred that the oil is liquid at a temperature below 45 degrees C. One preferred oil is palm olein.

In addition to, or instead of glycerides, the oils can contain fatty acid or medium or long chain carboxylic acid esters of other polyols such as propylene glycol, or sorbitol, or other sugars or sugar alcohols. Examples of sugar-derived oils include sucrose polyesters of long chain fatty acids such as the so-called "low calorie oils" and "zero-calorie oils" (Olestra), see for example US-A-3600186 and US-A-4005196.

Where the oily base of the suspension is not liquid at room temperature, or where the viscosity characteristics (e.g. flowability) required for pumping and dispensing are not optimal at room temperature, the oil can be heated, e.g. to a temperature in the range from 45 degrees C to 50 degrees C in order to bring the oil into the required liquid state. However, in order to avoid the need to heat the oil, the oil base can be selected from oils which are liquid at room temperature, examples of such oils being rapeseed oil. The suspension can be maintained in a continuously stirred or agitated state (e.g. by high shear mixing) prior to discharge from the reservoir or storage vessel to the tumbling vessel.

In a preferred embodiment, the oily vehicle contains a triglyceride oil and a polyol, or a partial ester (e.g. a fatty ester) of a polyol. Examples of polyols include glycerol, sugars and sugar alcohols, particular examples of sugars and sugar alcohols being those derived from trioses, tetroses, pentoses, hexoses and pentoses, including both monosaccharide and oligosaccharide (e.g. disaccharide) derivatives thereof. Examples of partial esters of polyols include partial esters formed from carboxylic acids of 6 or more carbon atoms, typically at least 10 carbon atoms, such as the fatty acids, e.g. stearic acid, oleic acid and palmitic acid. The partial esters are characterized in that they have at least one free hydroxyl group.

Particular partial esters of polyols are mono- and diglycerides, such as glycerol monostearate.

Without wishing to be bound by any theory, it is believed that the free hydroxyl group(s) on the polyol or polyol partial ester interacts with the fumed silica to form a three dimensional matrix or structure which aids in retaining the particles of improving agent in the suspended state.

The fumed silica is a microfine form of silica typically having a mean particle size of less than 1 micrometre. The fumed silica is characterized in that it has a very high specific volume and therefore low density. Examples of commercially available forms of fumed silica are "Aerosil" (available from Degussa)and "Cab-O-Sil".

The fumed silica assists in maintaining the particles of improving agent in suspension in the oily vehicle, possibly by forming a three dimensional network throughout the vehicle which prevents the particles from settling.

It has been found that the stability of the suspensions against settling can be further improved by carefully controlling the particle size range of the particles. Thus, preferably, the particles have a mean particle size of less than 100 micrometres and a particle size distribution whereby the d[0.5] value is less than 100 micrometres and the d[0.9] value is less than 300 micrometres.

The term "d[0.5]" as used herein refers to the breadth of the range of particle sizes containing 50% of the particles. Thus, for example, if 50% of the particles are of a size in the range from 20 micrometres to 50 micrometres, the d[0.5] value is 50 - 20 = 30. Similarly, the terms "d[10]" and "d[90]" refer respectively to the breadths of the particle size ranges containing respectively 10% and 90% of the particles. The d[0.1], d[0.5] and d[0.9] values thus provide a means of determining and defining the particle size distribution in the suspension. It is preferred that the particle size distribution of the improving agents is controlled such that the d[0.5] value is less than 20 micrometres, typically less than 15 micrometres and more preferably less than 10 micrometres. It is also preferred that the d[0.9] value of the improving agents is less than 250 micrometres, for example less than 200 micrometres, preferably less than 50 micrometres. It is further preferred that the d[0.1] value of the improving agents is less than 10 micrometres.

The particle sizes referred to above are the particle sizes that can be measured using the "Mastersizer" laser particle sizer available from Malvern Instruments Ltd, Malvern, UK.

In one preferred embodiment of the invention, the composition contains particles of improving agent having a mean particle size of less than 50 micrometres (for example less than 20 micrometres, preferably less than 15 micrometres) and a particle size distribution such that the d[0.5] value is less than 20 micrometres.

In a more preferred embodiment, the composition contains improving agents having a particle size distribution such that the d[0.1] value is less than 8 micrometres (e.g. less than 5 micrometres), the d[0.5] value is less than 15 micrometres (e.g. less than 10 micrometres) and the d[0.9] value is less than 25 micrometres (e.g. less than 20 micrometres).

An advantage of the suspensions of the present invention is their stability. The term stability as used herein refers to the stability against sedimentation. Thus, for example, it is preferred that the compositions exhibit substantially no sedimentation for a period of at least two weeks at 35°C, for example for a period of more than one month, preferably at least three months, and more preferably at least six months.

The suspensions of the invention are typically pourable or pumpable suspensions, i.e. suspensions having a viscosity at room temperature or on gentle warming to a temperature of up to about 50 degrees C (e.g. up to 45 degrees C) whereby they can be poured from a receptacle or can be pumped around a liquid transport or distribution system, e.g. through pipework, without the use of excessive pressures.

The compositions of the invention are in the form of suspensions in which, typically, the solids content can be of the order of approximately 15% to 55% (w/w), for example from 20% to 49% (w/w), preferably from 25% to 35%, e.g. approximately 30% (w/w).

In a preferred embodiment, the invention provides a liquid dough conditioner composition containing a bread improving agent, the liquid concentrate comprising 5-30% ascorbic acid, for example 10-20% ascorbic acid; up to 5% fumed silica, for example up to 3%; up to 3% polyol or polyol partial ester, for example 1-2%, and optionally one or more bread improving enzymes such as amylase; the balance consisting essentially of a vegetable oil.

The concentrates of the invention can be diluted in use by an oily diluent selected from:
(a) oils;
(b) mixtures of oils and liquid emulsifiers;
(c) liquid emulsifiers;
(d) solid emulsifiers dissolved in oils.

For example, the liquid concentrates can be diluted to the ratio of from one part of liquid concentrate to one part oily diluent, up to one part liquid concentrate to ten parts liquid diluent, more usually in the ratio of 1:1 to 1:5, for example, 1:1 to 1:3.

The bread improver compositions may contain one or more auxiliary substances such as flavouring or seasoning components and optionally diluents or carriers therefor. The flavouring and seasoning components of the suspensions can comprise any one or more types of ingredient selected from base materials, flavoured base materials, processing aids, acidic base materials, flavours, herbs and spices, flavour enhancers, colours, and artificial sweeteners.

Examples of base materials include sugars such as sucrose, glucose (e.g. dextrose), fructose, lactose and maltose, and sodium chloride. Flavoured base materials include onion powder, tomato powder, dairy powders such as milk, whey and casein powders, garlic powder, other vegetable powders and cheese powder.

Acidic base materials can be included, for example to create the impression or flavour of a fruit or other acid substance (e.g. to provide a citrus, apple or other fruit background), and examples include acids such as citric, ascorbic, malic, succinic, tartaric and acid salts such as acetates, and citrates.

Examples of flavours, are natural flavours (e.g. extracts such as oleoresins), powders, solutions or purees from natural flavouring sources, and flavours that contain topnotes identical or substantially identical to naturally occurring flavours. Particular examples of flavours include cheese, dairy, meat savoury, vegetable, fruit and fish flavours. Synthetic flavours include Maillard reactants and reaction products including Amadori and Heyns rearrangement products and post-rearrangement products.

The seasoning and flavourings can contain one of more of a large number of herbs and spices, for example in fresh, dried, powdered or flaked form, or extracts thereof, and specific examples of herbs and spices include black and white pepper, paprika, chilli, turmeric, cayenne, coriander, ginger, pimento, cinnamon and nutmeg.

Examples of flavour enhancers include yeast-based ingredients such as yeast extracts, and hydrolysed vegetable proteins such as hydrolysed soya protein, and flavour enhancing salts such as monosodium glutamate.

Colouring agents can be included and these can be of either natural or synthetic origin. Examples of colouring agents include caramel, plant derived colouring agents such as anthocyanines, turmeric, paprika and beta-carotene, and non-toxic dyestuffs such as sunset yellow.

Salt replacements can also be included if required and examples include potassium chloride and sodium chloride/potassium chloride mixtures).

It has been found that the method used to mill the components of the suspension has a significant effect on the properties of the suspension. More particularly, it has been found that high shear milling methods give suspensions with relatively poor rheological properties and a tendency to separate after a relatively short period. In contrast, high impact low shear milling methods such as ball milling have been found to give suspensions that remain stable even after chilling for several . In a ball mill, the components are tumbled with beads or balls of a hard material such as steel, or a ceramic or mineral material such as agate or zirconia, the impact of the beads or balls on the particles serving to break them into smaller particles but with minimal shearing forces being exerted on the particles. It is therefore preferred that the compositions of the invention are prepared using a low shear high impact milling method such as ball milling.

Accordingly, in a further aspect, the invention provides a method of preparing a bread improver composition as hereinbefore defined, which method comprises mixing the components of the composition in the oily carrier and milling the mixture by means of a low shear high impact milling method, such as ball milling, to give a suspension.

In a further aspect; the invention provides the use of a composition or concentrate as hereinbefore described for conditioning dough.

The invention will now be illustrated, but not limited by reference to the following examples.

### EXAMPLE 1

A bread improver composition was formed by mixing the following ingredients:

| **Ingredient** | **Percentage** | **Weight (Kilograms)** | **Volume (Litres)** |
|---|---|---|---|
| Rape Seed Oil | 69.62% | 208.86 | 230 |
| Amylase | 0.50 | 1.50 | 4 |
| Ascorbic acid fine powder | 17.64' | 52.92 | 88 |
| Dimodan SVM (glycerol monostearate) | 1.30 | 3.90 | 8 |
| Aerosil 200 (fumed silica) | 3.00 | 9.00 | 180 |

The rapeseed oil, amylase, ascorbic acid, glycerol monostearate and fumed silica were mixed together to form a coarse suspension or slurry. The slurry was then milled in a Dyno-Mill type KDL-A Ball Mill (available from Willy A. Bachofen AG Maschinenfabrik, Basel, Switzerland, or from Glen Creston Limited, Stanmore, Middlesex, England) using polyurethane agitator discs and zirconia (YTZ) grinding beads of 1 mm diameter. The conditions employed were as follows: peripheral disc speed 8.5, pressure 0 Bar, flow rate 8 litres per hour, inflow temperature ambient, and outflow temperature 34-39 degrees C. The resulting suspension had a smooth creamy consistency.

### EXAMPLE 2

A second composition was prepared from the following ingredients:

| **Ingredient** | **Percentage** | **Weight (Kilograms)** | **Volume (Litres)** |
|---|---|---|---|
| Rapeseed Oil | 75.31% | 225.92 | 245 |
| Amylase | 1.38 | 4.13 | 10 |
| Novamyl (Maltogenic Amylase) | 2.98 | 8.93 | 22 |
| Bioamylase V (hemicellulase) | 0.27 | 0.82 | 2 |
| Ascorbic acid fine powder | 15.57 | 46.70 | 76 |
| Dimodan SVM (glycerol monostearate) | 1.30 | 3.90 | 8 |
| Aerosil 200 (fumed silica) | 3.00 | 9.00 | 180 |

The foregoing ingredients were mixed and milled to form a stable suspension using the conditions as substantially set out in Example 1.

### EXAMPLE 3

### Preparation of diluted liquid compositions

The suspension compositions of Examples I and 2 were diluted with a liquid emulsifier (diacetyl tartaric acid monoglyceride ester) in the ratio of 1 part (250kg) suspension composition to three parts ester (750kg) to give less viscous suspensions suitable for dispensing by pouring or spraying.

### EXAMPLE 4

### Analysis of the Particle Size Distribution of the Suspensions

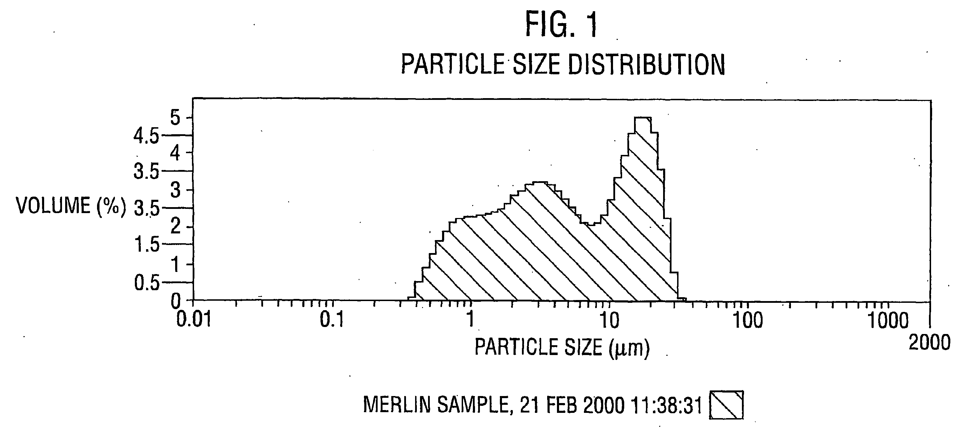

The particle size distributions within the bread improver suspension of Example 1 was determined using a Malvern Mastersizer 2000 laser particle sizer. The particle size distribution is shown in Figure 1. As can be seen from Figure 1, the volume weighted mean particle size is 8.344 micrometres whereas the surface weighted mean is 2.440. The d[0.1], d[0.5] and d[0.9] values respectively were 0.875 micrometres, 4.800 micrometres and 20.519 micrometres. Thus, by using the ball milling method, a suspension is formed in which the particle size range is very narrowly defined. The small size of the particles and the narrowness of the range, together with the presence of the fumed silica, provide greatly enhanced suspension stability such that sedimentation does not occur to any noticeable extent even after three months at 35 degrees C.

It will readily be apparent that numerous alterations and modifications can be made to the suspensions described in the Examples without departing from the principles underlying the invention, and all such modifications and alterations are intended to be embraced by this application.

## Claims

1. A liquid dough conditioner composition for adding to a dough mix, which composition comprises a suspension of an improving agent in an oily vehicle and a fumed silica stablizing agent, the improving agent being selected from oxidizing agents, reducing agents and enzymes, **characterised in that** the components of the composition have been milled by means of a low shear, high impact milling method; wherein the particles forming the suspension have a mean particle size of less than 100 micrometres and a particle size distribution whereby the d[0.5] value is less than 100 micrometres and the d[0.9] value is less than 300 micrometres.

2. A liquid dough conditioner composition according to claim 1 wherein the improving agent comprises ascorbic acid, and optionally one or more enzymes.

3. A liquid dough conditioner composition according to claim 2 wherein the enzyme is selected from amylases and cellulases.

4. A liquid dough conditioner composition according to any one of the preceding claims wherein the oily vehicle comprises one or more glycerides such as fatty acid triglycerides, diglycerides or monoglycerides or mixtures thereof and/or wherein the oily vehicle comprises one or more plant oils, animal oils or fish oils and/or blends and derivatives thereof such as hydrogenated or partially hydrogenated oils.

5. A liquid dough conditioner composition according to any one of the preceding claims wherein the oily vehicle contains a triglyceride oil and a polyol, or a partial ester (such as fatty ester) of a polyol.

6. A liquid dough conditioner composition according to claim 5 wherein the polyol is selected from glycerol, sugars and sugar alcohols.

7. A liquid dough conditioner composition according to claim 5 wherein the partial ester is selected from partial esters formed from carboxylic acids of 6 or more carbon atoms, typically at least 10 carbon atoms, such as the fatty acids, such as stearic acid, oleic acid and palmitic acid; or wherein the partial ester is selected from mono- and diglycerides, such as glycerol monostearate.

8. A liquid dough conditioner composition according to any preceding claim wherein the particles of improving agent have a mean particle size of less than 50 micrometres (for example less than 20 micrometres, preferably less than 15 micrometres) and a particle size distribution such that the d[0.5] value is less than 20 micrometres.

9. A liquid dough conditioner composition according to any preceding claim wherein the improving agents having a particle size distribution such that the d[0.1] value is less than 8 micrometres (e.g. less than 5 micrometres), the d[0.5] value is less than 15 micrometres (e.g. less than 10 micrometres) and the d[0.9] value is less than 25 micrometres (e.g. less than 20 micrometres).

10. A liquid dough conditioner composition according to claim 1 and containing a bread improving agent, the liquid composition comprising 5-30% ascorbic acid, for example 10-20% ascorbic acid; up to 5% fumed silica, for example up to 3%; up to 3% polyol or polyol partial ester, for example 1-2%, and optionally one or more bread improving enzymes such as amylase; the balance consisting essentially of a vegetable oil.

11. A method of preparing a dough conditioner composition as defined in any one of the preceding claims, which method comprises mixing the components of the composition in the oily carrier and milling the mixture by means of a low shear high impact milling method such that the particles forming the suspension have a mean particle size of less than 100 micrometres and a particle size distribution whereby the d[0.5] value is less than 100 micrometres and the d[0.9] value is less than 300 micrometres to give a suspension.

12. A method according to claim 11 wherein the milling method is ball milling.

13. The use for a composition according to any one of claims 1 to 10 for conditioning dough.

## Patentansprüche

1. Eine flüssige teigverbessernde Zusammensetzung zur Zugabe zu einer Teigmischung, wobei die Zusammensetzung eine Suspension aus einem Verbesserungsmittel in einem öligen Träger und ein Stabilisierungsmittel aus Quarzstaub umfasst, wobei das Verbesserungsmittel aus Oxidationsmitteln, Reduktionsmitteln und Enzymen ausgewählt ist, die **dadurch gekennzeichnet ist, dass** die Komponenten der Zusammensetzung durch ein schwach scherendes, stark einwirkendes Mahlverfahren gemahlen wurden, wobei die die Suspension bildenden Partikel eine mittlere Partikelgröße von weniger als 100 Mikrometer und eine Partikelgrößenverteilung aufweisen, bei der der d[0,5]-Wert geringer als 100 Mikrometer ist und der d[0,9]-Wert geringer als 300 Mikrometer ist.

2. Eine flüssige teigverbessernde Zusammensetzung gemäß Anspruch 1, wobei das Verbesserungsmittel Ascorbinsäure und optional ein oder mehrere Enzyme umfasst.

3. Eine flüssige teigverbessernde Zusammensetzung gemäß Anspruch 2, wobei das Enzym aus Amylasen und Cellulasen ausgewählt ist.

4. Eine flüssige teigverbessernde Zusammensetzung gemäß einem der vorangegangenen Ansprüche, wobei der ölige Träger ein oder mehrere Glyceride wie Fettsäuretriglyceride, Diglyceride oder Monoglyceride oder Mischungen davon umfasst und/oder wobei der ölige Träger ein oder mehrere Pflanzenöle, tierische Öle oder Fischöle und/oder Mischungen und Derivate davon wie hydrierte oder teilweise hydrierte Öle umfasst.

5. Eine flüssige teigverbessernde Zusammensetzung gemäß einem der vorangegangenen Ansprüche, wobei der ölige Träger ein Triglyceridöl und ein Polyol oder einen Partialester (wie ein Fettsäureester) eines Polyols enthält.

6. Eine flüssige teigverbessernde Zusammensetzung gemäß Anspruch 5, wobei das Polyol aus Glycerin, Zuckern und Zuckeralkoholen ausgewählt ist.

7. Eine flüssige teigverbessernde Zusammensetzung gemäß Anspruch 5, wobei der Partialester aus Partialestern ausgewählt ist, die aus Carbonsäuren mit 6 oder mehr Kohlenstoffatomen, typischer Weise wenigstens 10 Kohlenstoffatomen, wie die Fettsäuren wie Stearinsäure, Ölsäure und Palmitinsäure gebildet werden; oder wobei der Partialester aus Mono- und Diglyceriden wie Glycerinmonostearat ausgewählt ist.

8. Eine flüssige teigverbessernde Zusammensetzung gemäß einem der vorangegangenen Ansprüche, wobei die Partikel des Verbesserungsmittels eine mittlere Partikelgröße von weniger als 50 Mikrometer (zum Beispiel weniger als 20 Mikrometer, vorzugsweise weniger als 15 Mikrometer) aufweisen und eine solche Partikelgrößenverteilung aufweisen, dass der d[0,5]-Wert geringer als 20 Mikrometer ist.

9. Eine flüssige teigverbessernde Zusammensetzung gemäß einem der vorangegangenen Ansprüche, wobei die verbessernden Mittel eine solche Partikelgrößenverteilung aufweisen, dass der d[0,1]-Wert geringer als 8 Mikrometer (z. B. geringer als 5 Mikrometer) ist, der d[0,5]-Wert geringer als 15 Mikrometer (z. B. geringer als 10 Mikrometer) ist und der d[0,9]-Wert geringer als 25 Mikrometer (z. B. geringer als 20 Mikrometer) ist.

10. Eine flüssige teigverbessernde Zusammensetzung gemäß Anspruch 1, die ein brotverbesserndes Mittel enthält, wobei die flüssige Zusammensetzung 5 - 30 % Ascorbinsäure, z. B. 10 - 20 Ascorbinsäure; bis zu 5 % Quarzstaub, z. B. bis zu 3 %; bis zu 3 % Polyol oder Polyolpartialester, z. B. 1 - 2 % und optional ein oder mehrere brotverbessernde Enzyme wie Amylase enthält; wobei der Rest im Wesentlichen aus einem Pflanzenöl besteht.

11. Ein Verfahren zur Herstellung einer teigverbessernden Zusammensetzung, wie sie in einem der vorangegangenen Ansprüche definiert wird, wobei das Verfahren das Mischen der Komponenten der Zusammensetzung in dem öligen Träger und das Mahlen der Mischung mittels eines schwach scherenden, stark einwirkenden Mahlverfahrens umfasst, so dass die die Suspension bildenden Partikel eine mittlere Partikelgröße von weniger als 100 Mikrometer und eine Partikelgrößenverteilung aufweisen, wobei der d[0,5]-Wert geringer als 100 Mikrometer ist und der d[0,9]-Wert geringer als 300 Mikrometer ist, um eine Suspension zu ergeben.

12. Ein Verfahren gemäß Anspruch 11, wobei das Mahlverfahren Kugelmahlen ist.

13. Die Verwendung einer Zusammensetzung gemäß einem der Ansprüche 1 bis 10 zum Verbessern von Teig.

## Revendications

1. Composition liquide d'amélioration de pâte pour addition à un mélange de pâte, laquelle composition comprend une suspension d'un agent d'amélioration dans un véhicule huileux et d'un agent stabilisant à base de silice fumée, l'agent d'amélioration étant choisi parmi les agents d'oxydation, les agents réducteurs et les enzymes,
**caractérisée en ce que** les composants de la composition ont été broyés au moyen d'un procédé de broyage à impact élevé et faible cisaillement, les particules formant la suspension ayant une taille particulaire moyenne inférieure à 100 micromètres et une répartition des tailles particulaires où la valeur d[0,5] est inférieure à 100 micromètres et la valeur d[0,9] est inférieure à 300 micromètres.

2. Composition liquide d'amélioration de pâte selon la revendication 1, dans laquelle l'agent d'amélioration comprend de l'acide ascorbique, et facultativement une ou plusieurs enzymes.

3. Composition liquide d'amélioration de pâte selon la revendication 2, dans laquelle l'enzyme est choisie parmi les amylases et les cellulases.

4. Composition liquide d'amélioration de pâte selon l'une quelconque des revendications précédentes, dans laquelle le véhicule huileux comprend un ou plusieurs glycérides tels que des triglycérides, diglycérides ou monoglycérides d'acides gras ou leurs mélanges et/ou dans laquelle le véhicule huileux comprend une ou plusieurs huiles végétales, animales ou de poissons et/ou des mélanges et dérivés de celles-ci, tels que des huiles hydrogénées ou partiellement hydrogénées.

5. Composition liquide d'amélioration de pâte selon l'une quelconque des revendications précédentes, dans laquelle le véhicule huileux contient une huile à base de triglycérides et un polyol, ou un ester partiel (tel un ester gras) d'un polyol.

6. Composition liquide d'amélioration de pâte selon la revendication 5, dans laquelle le polyol est choisi parmi le glycérol, les sucres et les alcools de sucres.

7. Composition liquide d'amélioration de pâte liquide selon la revendication 5, dans laquelle l'ester partiel est choisi parmi les esters partiels formés à partir d'acides carboxyliques de 6 atomes de carbone ou davantage, typiquement d'au moins 10 atomes de carbone, tels que des acides gras, comme l'acide stéarique, l'acide oléique et l'acide palmitique ; ou dans laquelle l'ester partiel est choisi parmi les mono- et diglycérides, tels que le monostéréate de glycérol.

8. Composition liquide d'amélioration de pâte selon l'une quelconque des revendications précédentes, dans laquelle les particules de l'agent d'amélioration ont une taille particulaire moyenne inférieure à 50 micromètres (par exemple inférieure à 20 micromètres, de préférence inférieure à 15 micromètres) et une répartition des tailles particulaires telle que la valeur d[0,5] est inférieure à 20 micromètres.

9. Composition liquide d'amélioration de pâte selon l'une quelconque des revendications précédentes, dans laquelle les agents d'amélioration ont une répartition des tailles particulaires telle que la valeur d[0,1] est inférieure à 8 micromètres (par exemple inférieure à 5 micromètres), la valeur d[0,5] est inférieure à 15 micromètres (par exemple inférieure à 10 micromètres) et la valeur d[0,9] est inférieure à 25 micromètres (par exemple inférieure à 20 micromètres).

10. Composition liquide d'amélioration de pâte selon la revendication 1 et contenant un agent d'amélioration du pain, la composition liquide comprenant 5-30% d'acide ascorbique, par exemple 10-20 % d'acide ascorbique ; jusqu'à 5% de silice fumée, par exemple jusqu'à 3% ; jusqu'à 3% de polyol ou d'ester partiel de polyol, par exemple 1-2%, et facultativement une ou plusieurs enzymes d'amélioration du pain telles qu'une amylase ; le reste consistant essentiellement en une huile végétale.

11. Procédé de préparation d'une composition d'amélioration de pâte telle que définie dans l'une quelconque des revendications précédentes, lequel procédé comprend le mélange des composants de la composition dans le véhicule huileux et le broyage du mélange au moyen d'un procédé de broyage à impact élevé et faible cisaillement de telle sorte que les particules formant la suspension ont une taille particulaire moyenne inférieure à 100 micromètres et une répartition des tailles particulaires où la valeur d[0,5] est inférieure à 100 micromètres et la valeur d[0,9] est inférieure à 300 micromètres pour donner une suspension.

12. Procédé selon la revendication 11, dans laquelle le procédé de broyage est un broyage aux boulets.

13. Utilisation d'une composition selon l'une quelconque des revendications 1 à 10 pour l'amélioration de la pâte.
